# EUROPÄISCHE PATENTSCHRIFT

(11) **EP 0 988 783 B1**
(45) Veröffentlichungstag und Bekanntmachung des Hinweises auf die Patenterteilung: **13.10.2004**
(21) Anmeldenummer: 99104663.2
(22) Anmeldetag: 09.03.1999
(51) Int. Cl.: A01G 9/10

(54) **Kulturplatte zum Bewurzeln von Jungpflanzen**
Cultivation tray for rooting seedlings
Bac de culture pour l'enracinement de plantules

(30) Priorität: 25.09.1998 DE 19844020
(43) Veröffentlichungstag der Anmeldung: 29.03.2000
(73) Patentinhaber: Dümmen, Marga, 47495 Rheinberg (DE)
(72) Erfinder: Dümmen, Marga, 47495 Rheinberg (DE)
(74) Vertreter: Bergmann, Michael

(56) Entgegenhaltungen:
- DE-U- 29 507 247
- FR-A- 2 661 068
- US-A- 3 751 852
- US-A- 5 409 510

## Beschreibung

Die Erfindung richtet sich auf eine Kulturplatte zum Bewurzeln von Jungpflanzen in zur Aufnahme von nach unten orientierten Töpfen mit Löchern am Boden der Töpfe parallel zueinander ausgebildeten Rillen und mit einem die Kulturplatte umfassenden umlaufenden Rand, wobei der Plattenboden gegenüber dem Rand tieferliegend angeordnet ist. Weiterhin richtet sich die Erfindung auf eine Kulturplattenreihe, bestehend aus mehreren miteinander verbundenen Kulturplatten zum Bewurzeln von Jungpflanzen mit in Abstand zueinander im Plattenboden quergerichteten Rillen.

Eine bekannte Kulturplatte weist in parallel zueinander angeordneten Reihen topfartige Vertiefungen bzw. Töpfe auf, die oben offen sind und in ihrem Boden eine Öffnung kleineren Durchmessers haben. Die kleinere Öffnung im Boden dient dazu, den durchwurzelten Erdballen zusammen mit der Jungpflanze von unten her aus der topfartigen Vertiefung herauszudrücken und überschüssiges Wasser ablaufen zu lassen. Diese Kulturplatte ist rechteckig ausgebildet und hat einen umlaufenden Rand.

Eine weitere aus der EP 0 657 096 A1 bekannte Kulturplatte hat in der ersten Reihe anstelle der beiden äußersten Töpfe zwei Stützen sowie in der letzten Reihe anstelle der beiden zweitäußersten Töpfe zwei Stützen, die hohl und unten offen sowie nach oben orientiert sind. Hierbei ist vorgesehen, daß in der ersten Reihe die zwei zweitäußersten Töpfe am Boden je einen Stützring sowie in der letzten Reihe die zwei äußersten Töpfe am Boden je einen Stützring aufweisen und daß am oberen Ende der Stützen je ein Zentrierungsansatz vorgesehen ist. Die Stützen weisen in ihren zur Kulturplatte hinweisenden Wänden je eine Öffnung auf. Die Stützringe am Boden der zwei äußersten und der zwei zweitäußersten Töpfe weisen seitliche Ausnehmungen auf.

Aus der FR 2 661 068 A1 ist eine Kulturplatte zum Bewurzeln von Jungpflanzen mit parallel zueinander angeordneten Reihen zur Aufnahme von nach unten orientierten Töpfen mit Löchern am Boden der Töpfe und mit einem die Kulturplatte umfassenden umlaufenden Rand bekannt. Außerdem ist es aus dieser Druckschrift bekannt, dass der Plattenboden gegenüber dem Rand tieferliegend angeordnet ist und in vorbestimmbarem Abstand zueinander im Plattenboden quergerichtete Rillen vorgesehen sind. Eine rechteckige Platte weist in Querrichtung 5 und in Längsrichtung 10 Töpfe auf, wobei die Töpfe sowohl in Längsrichtung der Platte als auch in deren Querrichtung in Reihen hintereinander angeordnet sind. Des weiteren ist ein Plattenboden vorgesehen, der entsprechend den in Längsrichtung der Platte angeordneten Töpfen fünf Längsrillen aufweist, die in solchen Abständen zueinander angeordnet sind, dass eine gesamte Längsreihe von Töpfen in eine Längsrille des Plattenbodens hineinragt, so dass, wenn sich die Platte mit den Töpfen auf dem Plattenboden befindet, in jede Längsrille des Plattenbodens eine Reihe von Töpfen der Platte hineinragt. Dabei überdecken Randabschnitte der Töpfe die Oberseite der die Rillen begrenzenden Stegelemente.

Wenn die Töpfe, die mit kleinen Pflanzen bepflanzt sind und die in der Platte befindlichen bis zu 50 Pflanzen etwa mit einer Gießkanne bewässert werden, so wird das Wasser größtenteils durch die Blätter der Pflanzen von der in den Töpfen befindlichen Erde an den Töpfen vorbei in den Plattenboden weggeleitet. Es ist somit nicht sichergestellt, dass Wasser eindringen kann.

Dieselbe Gefahr besteht bei der aus der US-A-3 751 852 bekannten Kulturplatte. Auch dort werden Reihen von Pflanztöpfen in ein Tray eingestellt und übergreifen dabei die die Rillen voneinander trennenden Stege oder Bodenflächen.

Eine gattungsgemäße Kulturplatte ist aus der US-A-5 409 510 bekannt. Dort werden in die Rillen Pflanztöpfe eingestellt, die über die Bereiche zwischen zwei Rillen hinausragend sich bis an den oberen Rand der Kulturplatte erstrecken. Der Erstreckungsbereich endet oberhalb eines Wasserzuflussloches und stellt gleichzeitig den maximal in der bekannten Kulturplatte einzustellenden Wasserbadspiegel dar. Damit ist nicht sichergestellt, dass von oben Wasser in die Pflanztöpfe einfließen kann. Gegebenenfalls erfolgt die Befeuchtung des in den Töpfen enthaltenen Bodens lediglich durch die auf der Unterseite befindlichen Löcher. Fließt aber das Wasser schnell wieder ab, kann dies eventuell nicht ausreichend sein, um eine ausreichende Befeuchtung des Bodens in den Pflanztöpfen sicherzustellen. Es müssen daher spezielle Maßnahmen vorgesehen werden, damit das Wasser ausreichend lang in den Rillen der vorbekannten Kulturplatte stehen bleibt. Jedenfalls wird bei dieser Konstruktion, um eine ausreichende Bewässerung der Pflanztöpfe zu erreichen, eine nicht unerhebliche Wassermenge benötigt, damit die Rillen ausreichend hoch und ausreichend lang mit Wasser befüllt bleiben.

Eine gattungsgemäße Kulturplattenreihe ist aus der DE-U-295 07 247 bekannt. Der DE-U-295 07 247 ist ein Anstautisch zu entnehmen, bei dem die einzelnen Wannenteile zur Verbindung in Längsrichtung an ihren Enden im wesentlichen ebene Anschlußflächen aufweisen und dabei zwei Wannenteile miteinander durch zwei im wesentlichen aufeinander liegende ebene Anschlussflächen stoffschlüssig verbindbar sind.

Zum Bewässern der Pflanzen in diesen bekannten Kulturplatten ist sehr viel Wasser erforderlich.

Aus verschiedenen Gründen möchte man den Verbrauch von Wasser minimieren:
1. Ein hoher Verbrauch von Wasser beeinflußt das Gewächshausklima negativ. Krankheiten, vor allem pilzliche Krankheiten, werden dadurch gefördert.
2. Wasser ist nicht immer in genügender Menge vorhanden, beispielsweise auf Teneriffa.

Der Erfindung liegt die Aufgabe zugrunde, eine solche Kulturplatte zu schaffen, bei der zum Bewässern der Pflanzen vergleichsweise sehr wenig Wasser erforderlich ist.

Diese Aufgabe wird bei einer Kulturplatte der eingangs bezeichneten Art gemäß der Erfindung dadurch gelöst, daß der zwischen zwei benachbarten Rillen ligende Bereich des Plattenbodens der Kulturplatte dachforming ausgebildet ist und in den Rillen nebeneinander angeordnete Mehrfachtöpfe eingehängt sind, deren oberer Rand so gestaltet ist, daß er die Rillen vollständig schließt.

Durch die dachförmige Ausbildung des Plattenbodens und den Verschluß der Rillen durch den Rand der Töpfe wird erreicht, daß das Wasser zu den Rillen abläuft und dort in die Mehrfachtöpfe einfließt.

Zweckmäßig verfügt die Kulturplatte über Aufnahmerillen, in welchen der obere Rand der Mehrfachtöpfe gelagert ist.

Außerdem empfiehlt es sich, die Kulturplatte so auszubilden, daß die Mehrfachtöpfe oben zwei nach beiden Seiten abstehende Flansche aufweisen, die in einer Aufnahmerille gelagert sind.

In weiterer Ausgestaltung der Erfindung kann vorgesehen sein, daß die Mehrfachtöpfe mit wenigstens einem Loch zur Abfuhr des überschüssigen Wassers versehen sind und oberhalb des Bodens der Rille enden.

In weiterer Ausgestaltung der Erfindung können die gegenüberliegenden Wandungen der Rillen nach unten konisch verlaufen und die Wandungen der Mehrfachtöpfe ebenfalls nach unten konisch verlaufen.

Besonders vorteilhaft ist es, daß mehrere Kulturplatten zu einer längeren Kulturplattenreihe zusammengehakt werden können.

Bei einer Kulturplattenreihe der eingange bezeichneten Art wird die Aufgabe gemäß der Erfindung dadurch gelöst, daß die Kulturplattenreihe aus einer Anfangsplatte, wenigstens einer Mittelplatte und einer Endplatte besteht, welche die Merkmale des Anspruches 1 aufweisen.

Hierbei ist es von Vorteil, wenn die Kulturplatten in den querorientierten Rillen miteinander verhakt sind, was die Erfindung in Weiterbildung vorsieht.

In weiterer Ausgestaltung der Erfindung kann vorgesehen sein, daß die Anfangsplatte an ihrem zur Kulturplattenreihe orientierten Ende besäumt, die Endplatte ebenfalls an ihrem zur Kulturplattenreihe gerichteten Ende besäumt und die Mittelplatte an beiden Seiten besäumt ist, derart, daß die Anfangsplatte und die Endplatte einseitig in die benachbarte Mittelplatte einhakbar und eine Mittelplatte beidseitig an der benachbarten Anfangsplatte oder der benachbarten Endplatte oder einer benachbarten Mittelplatte einhakbar ist.

Die Erfindung wird nachfolgend anhand eines in der Zeichnung dargestellten Ausführungsbeispieles des näheren erläutert. Es zeigt
- Fig. 1: eine perspektivische Darstellung einer Kulturplattenreihe, bestehend aus ineinandergehakten einzelnen Kulturplatten,
- Fig. 2: eine perspektivische Darstellung der Kulturplattenreihe gemäß Fig. 1 mit mit gegenseitigem Abstand zueinander angeordneten einzelnen Kulturplatten und
- Fig. 3: einen Längsschnitt durch die Kulturplattenreihe längs der Linie III-III der Figur 1 mit einem Mehrfachtopf.

Die in der Zeichnung dargestellte Kulturplatte dient zum Bewurzeln von Jungpflanzen.

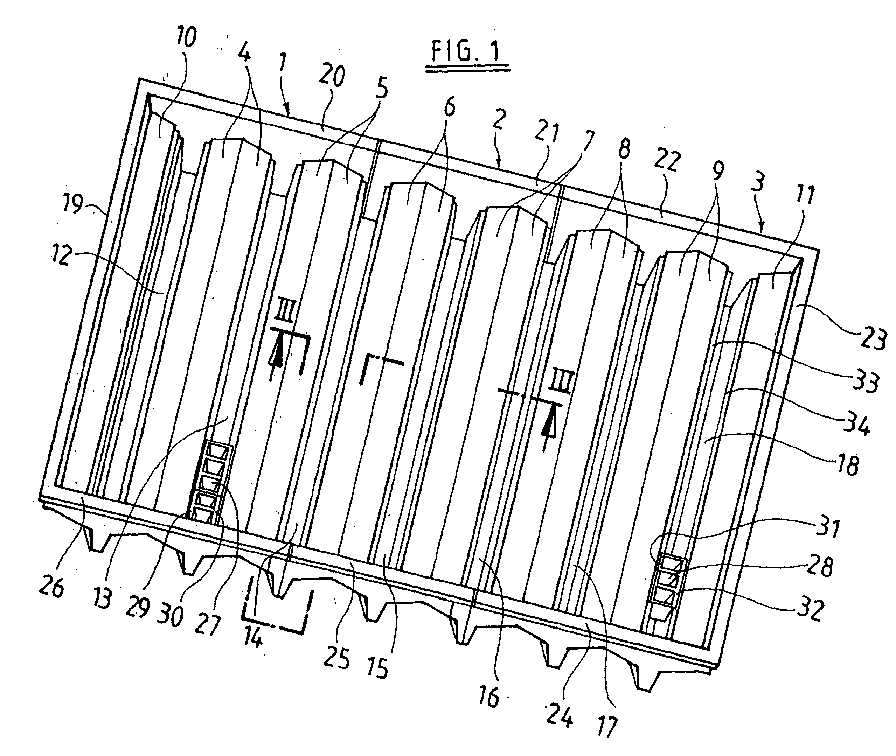

Die in Figur 1 dargestellte Kulturplattenreihe besteht aus einer Anfangsplatte 1, einer Mittelplatte 2 und einer Endplatte 3. Der Boden der Kulturplattenreihe besteht aus dachförmig ausgebildeten Teilabschnitten 4 bis 11, zwischen denen Rillen 12 bis 18 angeordnet sind. Außerdem ist ein umlaufender Rand 19 bis 26 vorgesehen.

In der Rille 13 ist ein Beispiel der Mehrfachtöpfe, in diesem Fall bestehend aus 5 Einzeltöpfen abgebildet. In Rille 18 ist ein Beispiel mit drei Einzeltöpfen abgebildet. Es können Mehrfachtöpfe mit 26 Einzeltöpfen vorgesehen sein. Die Mehrfachtöpfe 27,28 haben zu beiden Seiten je einen Flansch 29 bis 32, mit denen sie in treppenförmigen Ausformungen 33,34 am oberen Ende der die Rillen 18 bildenden Wandungen gelagert sind

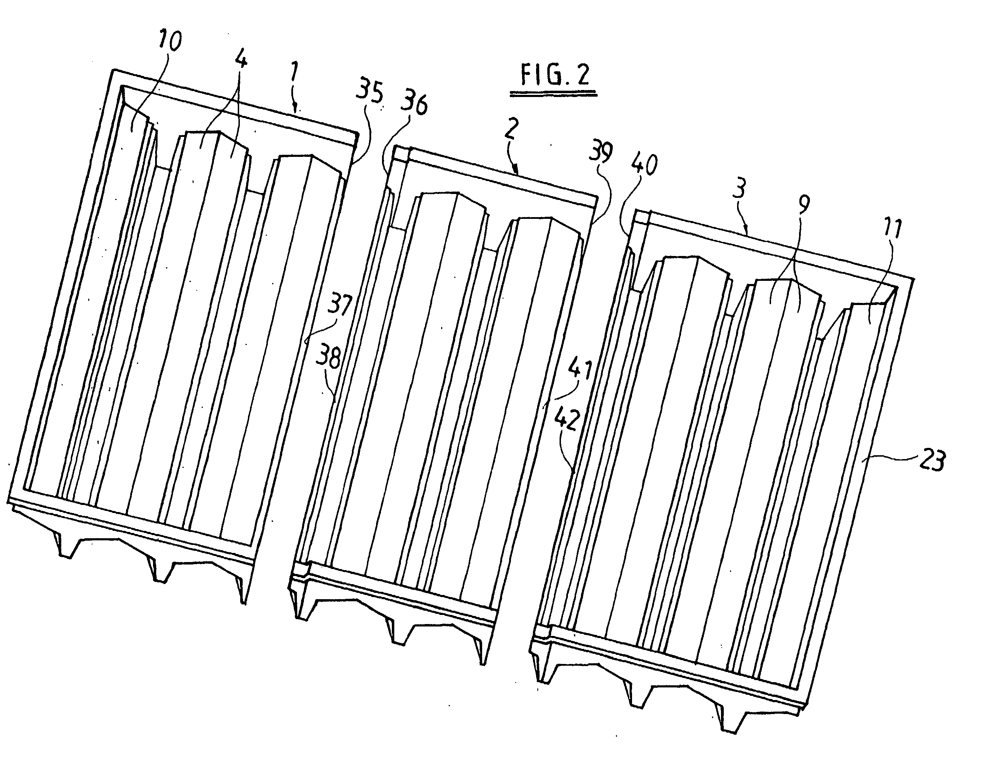

In Figur 2 ist die in Figur 1 dargestellte Kulturplattenreihe in nicht miteinander eingehaktem Zustand der einzelnen die Kulturplattenreihe bildenden Kulturplatten dargestellt. Es sind hier die gleichen Bezugszeichen verwendet wie in Figur 1. Die Anfangsplatte 1 ist an ihrem der Mittelplatte 2 zugewandten Ende besäumt. Desgleichen ist die Mittelplatte 2 an ihrem der Anfangsplatte 1 zugewandten Ende besäumt, wobei die beiden Besäumungen derart vorgenommen sind, daß die Anfangsplatte 1 mit ihrer äußersten Wandung der Rille über die äußerste Wandung der Rille der Mittelplatte 2 ragt, wodurch beide Platten 1 und 2 miteinander verhakt sind.

Die Endplatte 3 ist an ihrem der Mittelplatte 2 zugewandten Ende 37 besäumt. Desgleichen ist die Mittelplatte 2 an ihrem der Endplatte 3 zugewandten Ende 38 besäumt, und zwar derart, daß die Wandung 41 der Mittelplatte 2 über die Wandung 42 der Endplatte 3 ragt, wodurch beide Platten 2 und 3 miteinander verhakt sind.

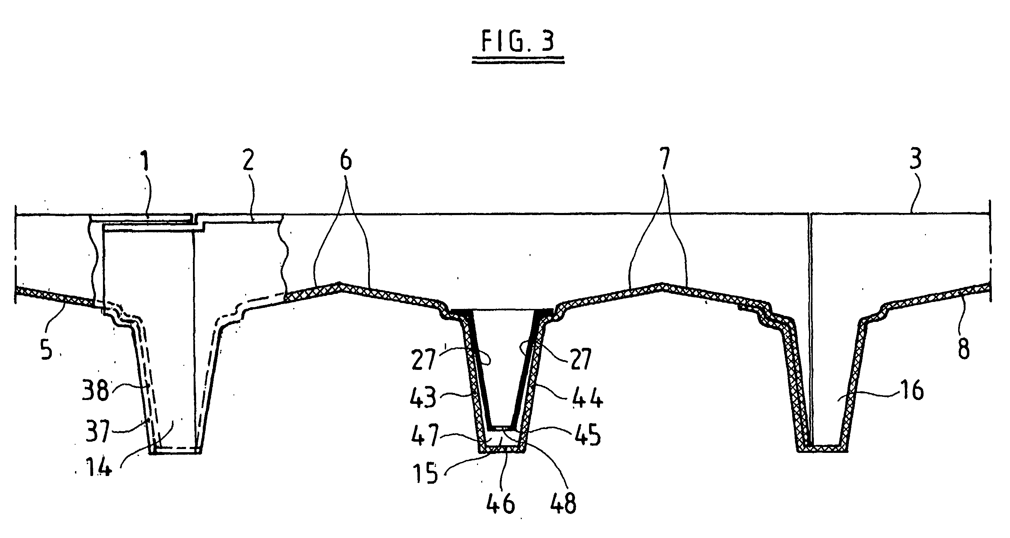

Diese Verhältnisse sind aus Figur 3 gut erkennbar. Die Wandung 38 der Anfangsplatte 1 überragt die Wandung 37 der Mittelplatte 2, wobei diese Wandungen einen Teil der Rille 14 bilden.

In der aus den beiden Wandungen 43 und 44 gebildeten Rille 15 stecken Mehrfachtöpfe 27. Zwischen den Böden 45 der Mehrfachtöpfe 27 und dem Boden 46 der Rinne 15 ist ein Zwischenraum 47 belassen, damit das durch die Bodenöffnung 48 der Mehrfachtöpfe 27 austretende Wasser im unteren Bereich der Rille 15 abfließen kann.

### Bezugszeichenliste

- 1: Anfangsplatte
- 2: Mittelplatte
- 3: Endplatte
- 4-11: Zwischenbereiche
- 12-18: Rillen
- 19-26: Rand
- 27: Mehrfachtöpfe
- 28: Mehrfachtöpfe
- 29-32: Flansch
- 33: Wandung
- 34: Wandung
- 35: Seite
- 36: Seite
- 37: Wandung
- 38: Wandung
- 39: Seite
- 40: Seite
- 41: Wandung
- 42: Wandlung
- 43: Wandung
- 44: Wandung
- 45: Boden
- 46: Boden
- 47: Zwischenraum
- 48: Loch

## Patentansprüche

1. Kulturplatte zum Bewurzeln von Jungpflanzen in zur Aufnahme von nach unten orientierten Töpfen mit Löchern am Boden der Töpfe parallel zueinander ausgebildeten Rillen (12 bis 18) und mit einem die Kulturplatte umfassenden umlaufenden Rand, wobei der Plattenboden gegenüber dem Rand tieferliegend angeordnet ist **dadurch gekennzeichnet,**
**daß** der zwischen zwei benachbarten Rillen (12 bis 18) liegende Bereich des Plattenbodens (4 bis 11) der Kulturplatte dachförmig ausgebildet ist, und
in den Rillen (12 bis 18) nebeneinander angeordnete Mehrfachtöpfe (27, 28) eingehängt sind, deren oberer Rand so gestaltet ist, daß er die Rillen (12 bis 18) vollständig schließt.

2. Kulturplatte nach Anspruch 1,
**dadurch gekennzeichnet, daß** die Kulturplatte über Aufnahmerillen (33,34) verfügt, in welchen der obere Rand der Mehrfachtöpfe (27,28) gelagert ist.

3. Kulturplatte nach Anspruch 1 oder 2,
**dadurch gekennzeichnet, daß** die Mehrfachtöpfe (27,28) oben zwei nach beiden Seiten abstehende Flansche (29 bis 32) aufweisen, die in einer Aufnahmerille (33, 34) gelagert sind.

4. Kulturplatte nach einem der vorhergehenden Ansprüche,
**dadurch gekennzeichnet, daß** die Mehrfachtöpfe (27,28) mit wenigstens einem Loch (48) zur Abfuhr des überschüssigen Wassers versehen sind und oberhalb des Bodens (46) der Rille (12 bis 18) enden.

5. Kulturplatte nach einem der vorhergehenden Ansprüche,
**dadurch gekennzeichnet, daß** die gegenüberliegenden Wandungen (43,44) der Rillen (12 bis 18) nach unten konisch verlaufen und die Wandungen der Mehrfachtöpfe (27,28) ebenfalls nach unten konisch verlaufen.

6. Kulturplatte nach einem der vorhergehenden Ansprüche,
**dadurch gekennzeichnet, daß** mehrere Kulturplatten (1,2,3) zu einer längeren Kulturplattenreihe zusammengehakt sind.

7. Kulturplattenreihe, bestehend aus mehreren miteinander verbundenen Kulturplatten zum Bewurzeln von Jungpflanzen mit in Abstand zueinander im Plattenboden quergerichteten Rillen,
**dadurch gekennzeichnet,**
**daß** die Kulturplattenreihe aus einer Anfangsplatte (1), wenigstens einer Mittelplatte (2) und einer Endplatte (3) besteht, welche die Merkmale des Anspruches 1 aufweisen.

8. Kulturplattenreihe nach Anspruch 7, **dadurch gekennzeichnet, daß** die Kulturplatten (1, 2, 3) in den querorientierten Rillen (12 bis 18) miteinander verhakt sind.

9. Kulturplattenreihe nach Anspruch 8 oder 9,
**dadurch gekennzeichnet, daß** die Anfangsplatte (1) an ihrem zur Kulturplattenreihe orientierten Ende besäumt, die Endplatte (3) ebenfalls an ihrem zur Kulturplattenreihe gerichteten Ende besäumt und die Mittelplatte (2) an beiden Seiten besäumt ist, derart, daß die Anfangsplatte (1) und die Endplatte (3) einseitig in die benachbarte Mittelplatte (2) einhakbar und eine Mittelplatte (2) beidseitig an der benachbarten Anfangsplatte (1) oder der benachbarten Endplatte (3) oder einer benachbarten Mittelplatte (2) einhakbar ist.

## Claims

1. A culture plate for rooting young plants in rows (12 to 18) which are arranged parallel to one another to receive downwardly oriented pots having holes in the base of the pots and having a peripheral edge surrounding the culture plate, in which the plate base is located lower down than the edge, **characterised in that** the region of the plate base (4 to 11) of the culture plate between two adjacent rows (12 to 18) is in the shape of a roof, and multiple pots (27, 28) arranged next to one another are suspended in the rows (12 to 18), their upper edge being shaped in such a way that it completely closes the rows (12 to 18).

2. A culture plate according to Claim 1, **characterised in that** the culture plate has receiving grooves (33, 34) in which the upper edge of the multiple pots (27, 28) is borne.

3. A culture plate according to Claim 1 or 2, **characterised in that** the multiple pots (27, 28) have at the top two flanges (29 to 32) which project to either side and are borne in a receiving groove (33, 34).

4. A culture plate according to one of the preceding claims, **characterised in that** the multiple pots (27, 28) are provided with at least one hole (48) for draining away surplus water and terminate above the base (46) of the row (12 to 18).

5. A culture plate according to one of the preceding claims, **characterised in that** the opposing walls (43, 44) of the rows (12 to 18) run downwards in a conical shape and the walls of the multiple pots (27, 28) also run downwards in a conical shape.

6. A culture plate according to one of the preceding claims, **characterised in that** a plurality of culture plates (1, 2, 3) are hooked together to form one relatively long line of culture plates.

7. A line of culture plates comprising a plurality of mutually connected culture plates for rooting young plants in rows which are directed transversely in the plate base and spaced from one another, **characterised in that** the line of culture plates comprises a starting plate (1), at least one middle plate (2) and an end plate (3), these having the features of Claim 1.

8. A line of culture plates according to Claim 7, **characterised in that** the culture plates (1, 2, 3) are hooked to one another in the transversely oriented rows (12 to 18).

9. A line of culture plates according to Claim 8 or 9, **characterised in that** the starting plate (1) is trimmed at its end oriented along the line of culture plates, the end plate (3) is also trimmed at its end directed along the line of culture plates and the middle plate (2) is trimmed on both sides such that the starting plate (1) and the end plate (3) may be hooked into the adjacent middle plate (2) on one side and a middle plate (2) may be hooked on both sides to the adjacent starting plate (1) or the adjacent end plate (3) or an adjacent middle plate (2).

## Revendications

1. Bac de culture pour l'enracinement de plantules pour recevoir, dans des rainures (12 à 18) parallèles les unes aux autres, des pots orientés vers le bas avec des orifices sur le fond des pots et avec un bord circonférentiel entourant le bac de culture, le fond du bac étant disposé plus bas par rapport au bord, **caractérisé en ce que** la zone située entre deux rainures (12 à 18) voisines du fond du bac (4 à 11) présente la forme d'un toit, et **en ce que** différents pots (27, 28) disposés l'un à côté de l'autre sont suspendus dans les rainures (12 à 18), le bord desdits pots étant formé de manière à fermer complètement les rainures (12 à 18).

2. Bac de culture selon la revendication 1, **caractérisé en ce que** le bac de culture dispose de rainures de réception (33, 34) dans lesquelles est logé le bord supérieur des différents pots (27, 28).

3. Bac de culture selon la revendication 1 ou 2, **caractérisé en ce que** les différents pots (27, 28) présentent en haut deux flasques ou collerettes (29 à 32) dépassant des deux côtés, lesquel(le)s flasques ou collerettes sont logé(e)s dans une rainure de réception (33, 34).

4. Bac de culture selon l'une des revendications précédentes, **caractérisé en ce que** les différents pots (27, 28) sont pourvus d'au moins un trou (48) pour évacuer l'eau en surplus et se terminent au-dessus du fond (46) de la rainure (12 à 18).

5. Bac de culture selon l'une des revendications précédentes, **caractérisé en ce que** les parois (43, 44) faisant face aux rainures (12 à 18) s'étendent vers le bas de façon conique et **en ce que** les parois des différents pots (27, 28) s'étendent également vers le bas de façon conique.

6. Bac de culture selon l'une des revendications précédentes, **caractérisé en ce que** plusieurs bacs de culture (1, 2, 3) sont accrochés ensemble pour former une rangée plus longue de bacs de culture.

7. Bac de culture composé de plusieurs bacs de culture reliés entre eux pour l'enracinement de plantules avec des rainures à distance les unes des autres orientées de façon transversale dans le fond du bac, **caractérisé en ce que** la rangée de bacs de culture est composée d'un premier bac (1), d'au moins un bac intermédiaire (2) et d'un bac terminal (3) qui présentent les caractéristiques de la revendication 1.

8. Bac de culture selon la revendication 7, **caractérisé en ce que** les bacs de culture (1, 2, 3) sont accrochés l'un à l'autre dans les rainures (12 à 18) orientées de façon transversale.

9. Bac de culture selon la revendication 8, **caractérisé en ce que** le premier bac (1) est muni d'un bord sur son extrémité orientée vers la rangée des bacs de culture, que le bac terminal (3) est également muni d'un bord sur son extrémité orientée vers la rangée des bacs de culture et que le bac intermédiaire (2) est muni d'un bord sur les deux côtés de manière à ce que le premier bac (1) et le bac terminal (3) sont accrochables d'un côté au bac intermédiaire (2) voisin et que le bac intermédiaire (2) est accrochable, des deux côtés, au premier bac (1) voisin ou au bac terminal (3) voisin ou sur un bac intermédiaire (2) voisin.
